# EUROPEAN PATENT APPLICATION

(11) **EP 4 478 685 A1**
(43) Date of publication of application: **18.12.2024**
(21) Application number: 23179794.5
(22) Date of filing: 16.06.2023
(51) Int. Cl.: H04L 67/12, H04L 67/5651, H04L 67/61, H04W 4/18, H04W 4/38, H04W 4/44

(54) **METHODS AND SYSTEM FOR MONITORING DRIVING EXPERIENCES OF AN AUTOMATED DRIVING SYSTEM OF A VEHICLE**

(71) Applicant: Zenseact AB, 417 56 Gothenburg (SE)
(72) Inventor: GILLBERG, Christoffer, 475 40 Hönö (SE); ROSEN, Erik, 441 43 Alingsås (SE)
(74) Representative: Zacco Sweden AB

(57) **Abstract**

A computer-implemented method for monitoring driving experiences of an Automated Driving System (ADS) of a vehicle and related aspects are disclosed. The method comprises receiving, by an ADS monitoring layer in communication with the ADS of the vehicle and operating on a computing device of the vehicle, a query to monitor for an indication of an occurrence one or more event message trigger conditions and an occurrence one or more event recording trigger conditions by monitoring ADS data. Further, in response to fulfilment of the one or more event message trigger conditions, the method comprises transmitting, by the ADS monitoring layer, a first trigger signal to the ADS, storing, at a datastore of the ADS, an event message dataset comprising metadata associated with an event causing the fulfilment of the one or more event message trigger conditions, and transmitting the event message dataset to one or more remote servers. Further, in response to fulfilment of one or more event recording trigger conditions, the method comprises transmitting, by the ADS monitoring layer, a second trigger signal to the ADS, storing, at the datastore of the ADS, an event recording dataset comprising perception data associated with the event causing the fulfilment of the one or more event recording trigger conditions and/or ADS output data associated with the event causing the fulfilment of the one or more event recording trigger conditions, and transmitting the event recording dataset to the one or more remote servers. Here, the event recording dataset is larger than the event message dataset.

## Description

### TECHNICAL FIELD

The disclosed technology relates to methods and systems, and other related aspects, for monitoring driving experiences of an Automated Driving System (ADS) of a vehicle. In particular, but not exclusively the disclosed technology relates to an architecture for collecting data from a fleet of ADS-equipped vehicles, where the data is divided into several flows, in order to enable efficient collection of relevant datasets without compromising on insights from the vehicle fleet.

### BACKGROUND

Vehicles which are equipped with an advanced driver-assistance systems (ADASs) and/or autonomous driving (AD) systems, collectively referred to herein as Automated Driving Systems (ADSs), generate huge amounts of sensor-related data as they are driven around. Data from real-life scenarios is critical in a data-driven development organisation where the ADS performance scales with amount of data collected. Current ADS solutions often rely upon data servers containing sensor data from a small amount of dedicated test vehicles collected in a limited time frame. These data collections therefore contain a very limited number of scenarios, and with ADS features continuously being developed and updated through Over-The-Air (OTA) updates, it is difficult to maintain adequate performance over time. Thus, it is envisioned that the next-generation of ADS solutions will be leveraged by continuously collecting data from the production fleet.

However, accessing the data from an entire fleet of vehicles (i.e. production vehicles or customer vehicles) and transmitting the data to a centralized server is very costly and technically challenging due to storage limitations, bandwidth limitations, and the immense need of post-processing to extract the relevant datasets for each individual use-case.

### SUMMARY

The herein disclosed technology seeks to mitigate, alleviate or eliminate one or more of the above-identified deficiencies and disadvantages in the prior art to address various problems relating technical constrictions (bandwidth limitations, storage limitations, etc.) for collecting data from a fleet of ADS equipped vehicles for evaluating and improving the performance of the ADS.

Various aspects and embodiments of the disclosed invention are defined below and in the accompanying independent and dependent claims.

A first aspect of the disclosed technology comprises a computer-implemented method for monitoring driving experiences of an Automated Driving System (ADS) of a vehicle. The method comprises receiving, by an ADS monitoring layer in communication with the ADS of the vehicle and operating on a computing device of the vehicle, a query to monitor for an indication of an occurrence one or more event message trigger conditions and an occurrence one or more event recording trigger conditions by monitoring ADS data. Further, in response to fulfilment of the one or more event message trigger conditions, the method comprises transmitting, by the ADS monitoring layer, a first trigger signal to the ADS, storing, at a datastore of the ADS, an event message dataset comprising metadata associated with an event causing the fulfilment of the one or more event message trigger conditions, and transmitting the event message dataset to one or more remote servers. Further, in response to fulfilment of one or more event recording trigger conditions, the method comprises transmitting, by the ADS monitoring layer, a second trigger signal to the ADS, storing, at the datastore of the ADS, an event recording dataset comprising perception data associated with the event causing the fulfilment of the one or more event recording trigger conditions and/or ADS output data associated with the event causing the fulfilment of the one or more event recording trigger conditions, and transmitting the event recording dataset to the one or more remote servers. Here, the event recording dataset is larger than the event message dataset.

A second aspect of the disclosed technology comprises a computer program product comprising instructions which, when the program is executed by a computing device of a vehicle, causes the computing device to carry out the method according to any one of the embodiments of the first aspect disclosed herein. With this aspect of the disclosed technology, similar advantages and preferred features are present as in the other aspects.

A third aspect of the disclosed technology comprises a (non-transitory) computer-readable storage medium comprising instructions which, when executed by a computing device of a vehicle, causes the computing device to carry out the method according to any one of the embodiments of the first aspect disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises a system for monitoring driving experiences of an Automated Driving System (ADS) of a vehicle. The system comprises one or more memory storage areas comprising program code, the one or more memory storage areas and the program code being configured to, with the one or more processors, cause the system to at least receive, by an ADS monitoring layer in communication with the ADS of the vehicle and operating on a computing device of the vehicle, a query to monitor for an indication of an occurrence one or more event message trigger conditions and an occurrence of one or more event recording trigger conditions by monitoring ADS data. Further, in response to fulfilment of the one or more event message trigger conditions, the system is caused to transmit, by the ADS monitoring layer, a first trigger signal to the ADS, store, at a datastore of the ADS, an event message dataset comprising metadata associated with an event causing the fulfilment of the one or more event trigger conditions, and transmit the event message dataset to one or more remote servers. Moreover, in response to fulfilment of one or more event recording trigger conditions, the system is caused to transmit, by the ADS monitoring layer, a second trigger signal to the ADS, store, at the datastore of the ADS, an event recording dataset comprising perception data associated with the event causing the fulfilment of the one or more event recording trigger conditions and/or ADS output data associated with the event causing the fulfilment of the one or more event recording trigger conditions, and transmit the event recording dataset to the one or more remote servers. Here, the event recording dataset is larger than the event message dataset. With this aspect of the disclosed technology, similar advantages and preferred features are present as in the other aspects.

A fifth aspect of the disclosed technology comprises a vehicle comprising an Automated Driving System (ADS) and a system according to any one of the embodiments disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that collection of data from ADS equipped vehicles is rendered more efficient and cost effective.

An advantage of some embodiments is that insight into the fleet of ADS equipped vehicles is enabled with efficient utilization of processing, memory and transmission resources.

An advantage of some embodiments is that one no longer has to rely on special-purpose test vehicles to gain insight into the workings of the ADS since data collection from a large vehicle fleet (i.e. production fleet) is rendered possible.

An advantage of some embodiments is that the data collection can be tailored to specific needs depending on the geographical extension of the fleet or current data need in a rapid fashion providing a more versatile tool for collecting high volumes of relevant data from ADS equipped vehicles.

An advantage of some embodiments is that faster releases of more performant and safer ADS functions are possible as compared to prior known solutions.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a method for monitoring driving experiences of an Automated Driving System (ADS) of a vehicle in accordance with some embodiments.
Fig. 2 is a schematic block diagram representation of a system for monitoring driving experiences of an Automated Driving System (ADS) of a vehicle in accordance with some embodiments.
Fig. 3 is a schematic illustration of a vehicle comprising a system for monitoring driving experiences of an Automated Driving System (ADS) of a vehicle in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. Similarly, the terminology at least one of A, B, and C is to be interpreted to cover the conjunctive and the disjunctive realization, meaning that at least one of A, B, and C is to be understood as A and/or B and/or C, i.e. only A, only B, only C, only A and B, only A and C, or only B and C.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

The term "Automated Driving System" (ADS) refers to a complex combination of various components that can be defined as systems where perception, decision making, and operation of the vehicle are performed by electronics and machinery instead of a human driver, and as introduction of automation into road traffic. Thus, the term "ADS" is herein used as a common term for advanced driver-assistance systems (ADAS) and Autonomous Driving (AD). The ADS preferably comprises level 3 ADS features or higher according to SAE J3016 levels of driving automation for on-road vehicles. The ADS features may for example be a traffic jam pilot, a highway pilot, or any other SAE J3016 level 3+ ADS feature.

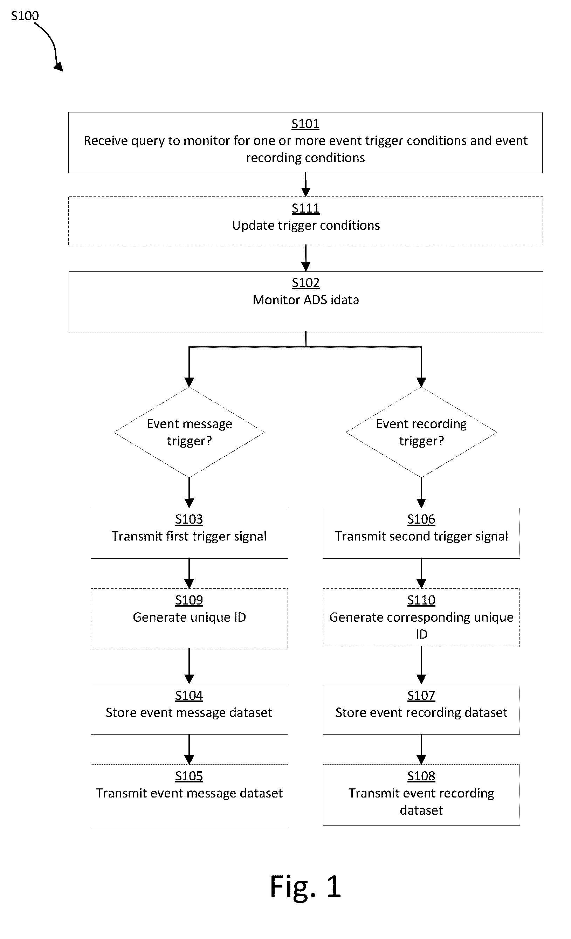

Fig. 1 is a schematic flowchart representation of a computer-implemented method S100 for monitoring driving experiences of an ADS of a vehicle in accordance with some embodiments. The method S100 is preferably a computer-implemented method S100, performed by a processing system of the ADS-equipped vehicle. The processing system may for example comprise one or more processors and one or more memories coupled to the one or more processors, wherein the one or more memories store one or more programs that cause the processing system to perform the steps, services and functions of the method S100 disclosed herein when executed by the one or more processors.

The method S100 comprises receiving S101, by an ADS monitoring layer in communication with the ADS of the vehicle and operating on a computing device of the vehicle, a query to monitor for an indication of an occurrence one or more event message trigger conditions and an occurrence one or more event recording trigger conditions by monitoring S102 ADS data. In some embodiments, the ADS data comprises (a) ADS input data, (b) ADS internal data, and (c) ADS output data. In some embodiments, the ADS of the vehicle comprises safety certified software and the ADS monitoring layer is an uncertified software layer that is separate from the safety certified software of the ADS. In some embodiments, the ADS monitoring layer is a software layer that is separated from the ADS.

In general, the software of an ADS is required to be safety certified in compliance with applicable standards, e.g., ISO standards, such as ISO 26262 and/or UN Regulations for the Automotive Industry. Thus, by having the ADS monitoring layer separated from the (safety certified) ADS software, one can push updates relating to the ADS monitoring layer without undergoing the cumbersome, time consuming, and costly updates otherwise related to updating the software of the ADS. In other words, by having ADS monitoring layer separated from the (safety certified) ADS software, one enables ADS data analysts to query a fleet of ADS vehicles for specific events and then receive relevant data with low latency, as compared to having to wait for the next software-release of the ADS in order to incorporate a feature that monitors for that specific event and then transmits the relevant data. Furthermore, the ADS monitoring layer is preferably isolated from the ADS software. In other words, the ADS monitoring layer is unable to alter or delete any software of the ADS, and furthermore unable to control the ADS (e.g. cause an activation or deactivation of any ADS functions or actuators of the vehicle).

Further, in response to fulfilment of the one or more event message trigger conditions, the method S100 comprises transmitting S103, by the ADS monitoring layer, a first trigger signal to the ADS. The first trigger signal may for example be transmitted to an ADS logging unit/module/system of the ADS. Then, an event message dataset comprising metadata associated with an event causing the fulfilment of the one or more event message trigger conditions is stored S104 at a datastore of the ADS (or of the ADS logging system). Further, the stored event message dataset is transmitted S105 to one or more remote servers. The event message dataset may be encrypted and/or compressed prior to the storing S104 or prior to the transmission S105.

Still further, in response to fulfilment of one or more event recording trigger conditions, the method S100 comprises transmitting S106, by the ADS monitoring layer, a second trigger signal to the ADS. Similarly, as before, the second trigger signal may for example be transmitted to the ADS logging system. Then, an event recording dataset comprising perception data associated with the event causing the fulfilment of the one or more event recording trigger conditions and/or ADS output data associated with the event causing the fulfilment of the one or more event recording trigger conditions is stored S107 at the datastore of the ADS (or of the ADS logging system). Further, the stored event recording dataset is transmitted S108 to the one or more remote servers. Here, the event recording dataset is larger than the event message dataset. The event recording dataset may for example be several orders of magnitude larger (e.g. 10³-10⁸ times larger) than the event message dataset. The event recording dataset may be encrypted and/or compressed prior to the storing S107 or prior to the transmission S108. In some embodiments, the event recording dataset may comprise ADS input data, ADS internal data, and/or ADS output data.

The term "perception data" refers to the information gathered by sensors and other technologies that are used by ADS-equipped vehicles to detect and interpret their environment. This includes data collected from cameras, lidar, radar, and other sensors that help the vehicle "perceive" its surroundings and make decisions based on that information. The perception data collected by the vehicle may include the position, speed, and direction of nearby objects, position and type of road markings, position and type of traffic signs, and other relevant information. This data may then be processed by the vehicle's onboard computer to help it make decisions on steering, acceleration, braking, and other actions necessary to safely navigate the environment. Accordingly, the term "perception" data may refer to "surroundings assessment" data, "spatial perception" data, "processed sensory" data and/or "temporal dependencies" data, whereas perception "data" may refer to perception "information" and/or "estimates". The term "obtained" from a perception module or perception system, on the other hand, may refer to "derived" from a perception model and/or "based on output data" from a perception module or system. whereas perception module/system configured to "generate the set of perception data" may refer to perception module/system adapted and/or configured to "estimate the surroundings of said vehicle", "estimate at least a portion of surroundings of said vehicle", "determine surroundings of said vehicle", "interpret sensory information relevant for the autonomous manoeuvring of said vehicle", and/or "estimate surroundings of said vehicle and make model predictions of future states of the surroundings of said vehicle".

A "query" may in the present context be interpreted as a signal comprising a request for information about one or more events from a remote entity (e.g. a remote server). In other words, receiving S101 a query may comprise receiving a signal from a remote server, where the signal comprises a request for information about one or more events. The information is then provided on the basis of the one or more event message trigger conditions and/or the one or more event trigger conditions being fulfilled. Thus, the received S101 query instructs the ADS monitoring layer to monitor the ADS data to determine whether or not one or more event message trigger conditions and/or the one or more event trigger conditions are fulfilled. In some embodiments, the received S101 query instructs the ADS monitoring layer to monitor the ADS input data, the ADS internal data, and the ADS output data to determine whether or not one or more event message trigger conditions and/or the one or more event trigger conditions are fulfilled.

The division or separation of the datasets into "event message datasets" and "event recording datasets" provides for an efficient solution for monitoring driving experiences of a fleet of ADS-equipped vehicles since it makes it possible to collect high priority data (event messages datasets) having low bandwidth requirements, and also to collect low priority data (event recording datasets) having high bandwidth requirements. Thereby, faster access to data related to driving experience events is enabled, and in extension safer and more performant ADSs can be provided at a higher pace as compared to other known solutions.

The metadata, comprised in the event message dataset, may for example include a geographical location of the event causing the fulfilment of the one or more event trigger conditions, a timestamp of the event causing the fulfilment of the one or more event trigger conditions, a classification of the event causing the fulfilment of the one or more event trigger conditions, ADS hardware information, ADS software information, weather information, vehicle information, a processing load value of the ADS, a RAM usage value of the ADS, a confidence in a perception output of the ADS, a confidence in a road model output of the ADS. The event recording datasets may, on the other hand, include ADS input data (e.g., sensor output data), ADS internal data (e.g. data transmitted between various modules or functions of the ADS, such as road models, target paths and/or target trajectories, etc.), and/or ADS output data (e.g., control signals to actuators of the vehicle).

As used herein, the term "in response to" may be construed to mean "when or "upon" or "if" depending on the context. Similarly, the phrase "in response to fulfilment of a condition" may be construed to mean "when it is determined that a condition is fulfilled" or "in an instance of fulfilment of a condition" "upon determining a fulfilment of a condition" or "upon detecting and identifying occurrence of an event fulfilling a condition" or "in response to detecting occurrence of an event fulfilling a condition", depending on the context.

Thus, the event recording datasets are typically significantly larger than the event message datasets. Due to the larger size, event recording datasets are not always feasible to transmit from the vehicles. However, thanks to the separation of data streams, it remains cost effective to collect data from the fleet of vehicles in order to enable fleet insight. In more detail, transmission and collection of fleet data typically need to comply with local rules and regulations (data privacy, data security, and data access rights) and/or bandwidth availability, which can limit the amount and/or type of data that can be transmitted and collect. However, by means of the herein proposed architecture, valuable fleet insight is still enabled due to the typically insensitive nature of the data comprised by the event message dataset as defined herein.

In some embodiments, the method S100 further comprises in response to fulfilment of the one or more event message trigger conditions, generating S109 a unique identifier for the event message dataset. Moreover, the storing S104 of the event message dataset may accordingly comprise storing the generated S109 unique identifier. Further, in response to fulfilment of the one or more event recording trigger conditions, the method S100 may comprise generating S110 a corresponding unique identifier for the event recording dataset so to enable pairing of event message datasets and event recording datasets associated with the same event. Accordingly, the storing S107 of the event recording dataset may comprise storing the generated S110 corresponding unique identifier. By generating the unique identifiers for the event message datasets and the event recording datasets pertaining to the same "event" causing the triggering of the trigger conditions, the two datasets may later be correlated in the database of the remote server(s), even if they are transmitted, and subsequently received, at different times.

Moreover, in some embodiments, the one or more event message trigger conditions comprise one or more of the following trigger conditions.
- A detection of an autonomous activation or deactivation of an ADS safety function. Examples of ADS safety functions include Emergency Brake Systems (EBS), Lane Keeping System (LKS), Lane Departure Warning Systems (LDWS), Minimum Risk Manoeuvre (MRM) systems, and/or any other ADS safety functions as readily recognized by the skilled person in the art.
- A detection of an autonomous activation or deactivation of an ADS driving function. Examples of ADS driving functions include Adaptive Cruise Control, Automatic Lane Change Systems, Valet Parking Systems, Traffic Jam Pilots (TJP), Highway Pilots, and/or any other "Autopilot" functionality.
- A detection of a predefined object in a surrounding environment of the vehicle. Examples of predefined objects include specific animals, specific vehicles, and so forth. Moreover, the one or more event message trigger conditions may include a confidence of an object detection being above or below a threshold.
- A detection of a predefined scenario in a surrounding environment of the vehicle. Examples of predefined scenarios include an accident scenario, a near-accident scenario, a specific weather condition (e.g. snow or rain), a specific road condition (e.g., slippery and/or wet), a presence of a dangerous road user (e.g., speeding vehicle, swerving vehicle, etc.), and so forth.
- A detection of a discrepancy between map data and sensor data. Examples of discrepancies between map data and sensor data include if the map data indicates a first road geometry while the sensor data indicates a different road geometry, or if the map data indicates a presence of landmark while the sensor data does not indicate a presence of the landmark, and so forth.
- A detection of an error message from the ADS. Examples of error messages from the ADS include bug reports of the ADS, entries in error logs, and so forth.
- A detection of a processing load of the ADS satisfying a threshold. Examples of processing loads of the ADS satisfying a threshold include if the CPU of the ADS reaches a processing load above 80%, 90%, 95% or 99%.
- A detection of a Random-Access Memory (RAM) usage satisfying a threshold. Examples of RAM usage satisfying a threshold include if the RAM usage of the ADS reaches a load above 80%, 90%, 95% or 99%.
- A detection of one or more message drops within the ADS.

In some embodiments, the event recording trigger conditions comprise a subset of the event message trigger conditions. In more detail, it is envisioned that an event message dataset will suffice for subsequent analysis of an event for a large number of detectable events experienced by the ADS of the vehicle, wherefore it would inefficient, or even unfeasible, to collect event recording datasets for all possible triggering events that are experienced by the ADS of the vehicle. Accordingly, in some cases one event or scenario will fulfil an event message trigger condition and fulfil an event recording trigger condition. However, in some cases one event or scenario will only fulfil an event message trigger condition and not any event recording trigger conditions.

Further, in some embodiments, the one or more event message trigger conditions comprises one or more dynamically configurable event message trigger conditions and/or the one or more event recording trigger conditions comprises one or more dynamically configurable event recording conditions. In other words, the event message trigger conditions and the event recording trigger conditions need not be static, but can be altered, new trigger conditions may be added, and/or existing trigger conditions may be removed, e.g., through an Over-The-Air (OTA) update that is broadcasted to a plurality of vehicles. As mentioned before, since the ADS monitoring layer may be separated (and isolated) from the (safety certified) ADS, a higher degree of freedom may be enabled for deploying logic for event detection in the vehicle.

In some embodiments, the query further comprises update data/information comprising one or more new or updated event message conditions and/or one or more new or updated event recording conditions. The method S100 may further comprise updating Sill the one or more dynamically configurable event message trigger conditions and/or of the one or more dynamically configurable event recording trigger conditions based on the update data/information. Here, the step of updating S111 may comprise adding a new event message trigger condition and/or event recording trigger condition, altering an existing event message trigger condition and/or event recording trigger condition, and/or removing/deleting an existing event message trigger condition and/or event recording trigger condition.

Still further, in some embodiments, the generated event message dataset is transmitted S105 to the one or more remote servers upon having an established communication link to the one or more remote servers satisfying a first set of link quality criteria, and the generated event recording dataset is transmitted S108 to the one or more remote servers upon having an established communication link to the one or more remote servers satisfying a second set of link quality criteria. Here, the second set of link quality criteria may comprise a higher bandwidth requirement than the first set of link quality criteria. However, additionally or alternatively, the first set of link quality criteria comprises a higher number of allowable communication link types than the second set of link quality criteria. For example, the first set of link quality criteria may allow that the event message datasets are allowed to be transmitted S105 on cellular network links (e.g. 4G, 5G, etc.) or via a Wi-Fi network link, while the second set of link quality criteria may allow for the event recording datasets to only be transmitted S108 via a Wi-Fi network link. In other words, the first set of link quality criteria may comprise a first set of allowable communication protocols and the second set of link quality criteria may comprise a second set of allowable communication protocols, where the second set of allowable communication protocols is smaller than the first set of allowable communication protocols.

Executable instructions for performing these functions are, optionally, included in a non-transitory computer-readable storage medium or other computer program product configured for execution by one or more processors.

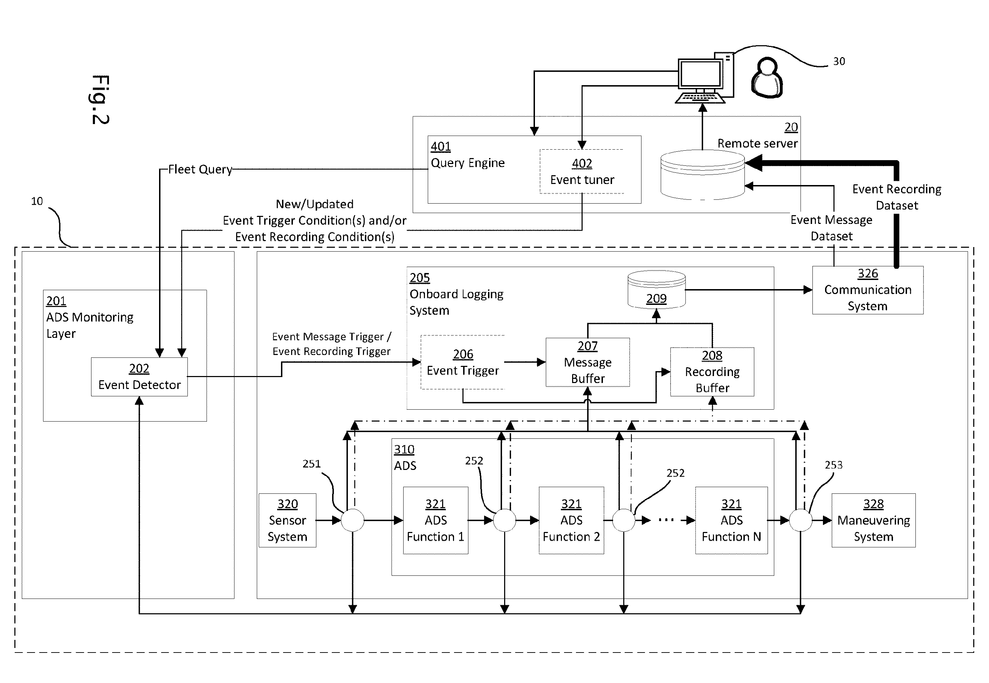

Fig. 2 is a schematic block diagram of a system 10 for monitoring driving experiences of an Automated Driving System (ADS) of a vehicle in accordance with some embodiments. In more detail, Fig. 4 serves to further the above-described embodiments related to the monitoring driving experiences by schematically illustrating the flow of information and the various process steps. The system 10 comprises control circuitry (e.g. one or more processors) configured to perform the functions of the method S100 disclosed herein, where the functions may be included in a non-transitory computer-readable storage medium or other computer program product configured for execution by the control circuitry. However, in order to better elucidate the embodiments, the control circuitry is represented as various modules or blocks in Fig. 2, each of them linked to one or more specific functions of the system.

The system 10 comprises one or more memory storage areas comprising program code, the one or more memory storage areas and the program code configured to, with the one or more processors, cause the system 10 to perform the method S100 according to any one of the embodiments disclosed herein. In particular, the one or more memory storage areas and the program code are configured to, with the one or more processors, cause the system 10 to receive, by an ADS monitoring layer 201 in communication with the ADS 310 of the vehicle and operating on a computing device of the vehicle 10, a query to monitor for an indication of an occurrence one or more event message trigger conditions and an occurrence of one or more event recording trigger conditions by monitoring ADS data. In some embodiments, the ADS data comprises (a) ADS input data 251, (b) ADS internal data 252, and (c) ADS output data 253. The query may for example be transmitted from a remote server, where an operator, via an input device 30, may instruct a query engine 401 of the remote server 20 to transmit the query to one or more vehicles.

In some embodiments, the ADS input data 251 comprises the output from the vehicle's sensor system 320. The sensor system's 320 output may comprise sensor output (e.g. camera output, radar output, lidar output, etc.) and/or post-processed sensor output (e.g. object-level data such as object classifications, object detections, etc.). In some embodiments, the ADS internal data 252 comprises information or data that is transmitted from one ADS function 321 to another ADS function 321 such as e.g., road models, lane traces, etc. In some embodiments, the ADS output data 253 comprises information or data that is transmitted from the ADS software stack 310 to the manoeuvring system 328 of the vehicle such as e.g., control signals that are transmitted to the actuators of the vehicle (e.g. steering actuators, throttle actuators, and braking actuators). Furthermore, in some embodiments, the ADS internal data 252 or the ADS output data 253 comprises error messages, a processing load of the ADS, and a RAM usage (or memory usage) of the ADS.

Thus, the ADS monitoring layer 201 may comprise an event detector 202 configured to instrument and subscribe to the ADS data, such as e.g., the ADS input data 251, ADS internal data 252, and the ADS output data 253 in order to determine if an "event of interest" has occurred. As mentioned in the foregoing, the "events of interest" may comprise events internal to the ADS (e.g. errors, activations or deactivations of ADS functions, processing load, memory usage, etc.) and/or events outside of the ADS occurring in the surrounding environment of the vehicle. The surrounding environment of the vehicle can be understood as a general area around the vehicle in which objects (such as other vehicles, landmarks, obstacles, etc.) can be detected and identified by vehicle sensors (radar, LIDAR, cameras, etc.), i.e. within a sensor range of the vehicle.

Further, in response to fulfilment of the one or more event message trigger conditions, the one or more memory storage areas and the program code are configured to, with the one or more processors, cause the system 10 to transmit, by the ADS monitoring layer 201, a first trigger signal to e.g., an ADS logging system 205 of the ADS 310. The system 10 is further caused to store, at a datastore 209 of the ADS logging system 205, an event message dataset comprising metadata associated with an event causing the fulfilment of the one or more event trigger conditions, and to transmit the event message dataset to one or more remote servers 20. The event message dataset may for example be transmitted to the remote server 20 using a communication system 326 comprising one or more transceivers and antennas.

Further, in response to fulfilment of one or more event recording trigger conditions, the one or more memory storage areas and the program code are configured to, with the one or more processors, cause the system 10 to transmit, by the ADS monitoring layer 201, a second trigger signal to e.g., the ADS logging system 205 of the ADS. The system 10 is further caused to storing, at the datastore of the ADS logging system of the ADS, an event recording dataset comprising perception data 251 associated with the event causing the fulfilment of the one or more event trigger conditions and/or ADS output data 253 associated with the event causing the fulfilment of the one or more event trigger conditions, and to transmit the event recording dataset to the one or more remote servers 326. As before, the event recording dataset is larger than the event message dataset.

The event message dataset and the event recording dataset may for example be stored in a message data buffer 207 and a recording data buffer 208, respectively. In some embodiments, the event message dataset and the event recording dataset (or the different types of data constituting the different datasets) are continuously stored in the data buffers 207, 208 while the vehicle is operating. Then, once the ADS logging system 205 receives a respective trigger signal from the ADS monitoring layer 201, the data comprised by the respective data buffer 207, 208 is persisted in a persistent storage unit 209 of the ADS logging system 205. The datasets persisted in the persistent storage unit 209 may for example be encrypted and compressed prior to being persisted/stored. Moreover, once the datasets have been transmitted to the remote server 20, they can be deleted from the persistent storage unit 209.

The length of the data buffer 207, 208 may be of any arbitrary size deemed feasible, e.g. in consideration of data capacity restraints and/or characteristics of the ADS, and may for instance range from under a second up to several minutes, or more preferred, from a few seconds up to less than a minute. An advantage of utilizing data buffers 207, 208 is that the entire temporal development of an "event of interest" may be captured, persisted, and later transmitted to the remote server 20. The data buffers 207, 208 may be in the form of First-In First-Out (FIFO) buffers (e.g. in the form of a fast access memory such as a Random Access Memory, RAM).

Accordingly, the event message data buffer 207 subscribes (i.e. monitors and stores) to a limited dataset of the ADS data (e.g., the ADS input data 251, ADS internal data 252, and/or the ADS output data 253) so that a limited amount of historical data is available in case an event occurs that triggers an event message triggering condition. Similarly, the event recording data buffer 208 subscribes (i.e. monitors and stores) to a larger amount of the ADS data (e.g., the ADS input data 251, ADS internal data 252, and/or the ADS output data 253), as compared to the event message data buffer 207, so that a limited amount of historical data is available in case an event occurs that triggers an event recording triggering condition.

Further, in accordance with some embodiments, and in response to fulfilment of the one or more event message trigger conditions, the one or more memory storage areas and the program code are configured to, with the one or more processors, cause the system 10 to generate a unique identifier for the event message dataset. Here, storing the event message dataset comprises storing the generated unique identifier. Moreover, in response to fulfilment of the one or more event recording trigger conditions the one or more memory storage areas and the program code are configured to, with the one or more processors, cause the system 10 to generate a corresponding unique identifier for the event recording dataset so to enable pairing of event message datasets and event recording datasets associated with the same event. Here, storing the event recording dataset comprises storing the generated corresponding unique identifier.

In some embodiments, the one or more event message trigger conditions comprises one or more dynamically configurable event message trigger conditions and/or the one or more event recording trigger conditions comprises one or more dynamically configurable event recording conditions. Moreover, in some embodiments, the query further comprises update data comprising one or more new or updated event message conditions and/or one or more new or updated event recording conditions. Accordingly, the one or more memory storage areas and the program code may be configured to, with the one or more processors, cause the system 10 to update the one or more dynamically configurable event message trigger conditions and/or the one or more dynamically configurable event recording trigger conditions based on the received update data. Accordingly, the query engine 401 may comprise an event tuner module 402, through which an operator can add, alter or remove trigger conditions. In other words, the "events of interest" may be dynamically configurable.

Further, in some embodiments, the generated event message dataset is transmitted (e.g. via the communication system 326) to the one or more remote servers 20 upon having an established communication link to the one or more remote servers 20 satisfying a first set of link quality criteria. Similarly, the generated event recording dataset may be transmitted (e.g. via the communication system 326) to the one or more remote servers 20 upon having an established communication link to the one or more remote servers satisfying a second set of link quality criteria. Here, the second set of link quality criteria may comprise a higher bandwidth requirement than the first set of link quality criteria. In other words, the event message datasets can be transmitted via communication links with lower bandwidth capacity as compared to the event recording datasets.

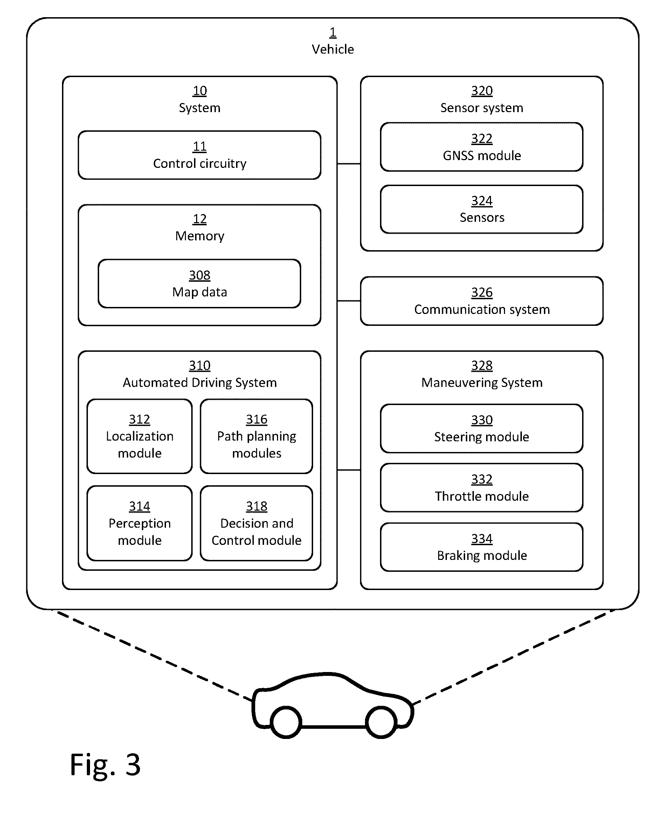

Fig. 3 is a schematic illustration of an ADS-equipped vehicle 1 comprising such a system 10. As used herein, a "vehicle" is any form of motorized transport. For example, the vehicle 1 may be any road vehicle such as a car (as illustrated herein), a motorcycle, a (cargo) truck, a bus, etc.

The system 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random-access memory, such as DRAM, SRAM, DDR RAM, or other random-access solid-state memory devices, and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 3. Moreover, the vehicle 1 may comprise further elements than those shown in Fig. 3. While the various elements are herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 3 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output (e.g. event message datasets and event recording datasets) to a remote location (e.g. remote operator or control center) and/or to receive input (e.g. queries) from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the system 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various receiving steps, transmitting steps, storing steps, updating steps, and generating steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for monitoring driving experiences of an Automated Driving System (ADS) of a vehicle, the method comprising:
receiving (S101), by an ADS monitoring layer in communication with the ADS of the vehicle and operating on a computing device of the vehicle, a query to monitor for an indication of an occurrence one or more event message trigger conditions and an occurrence one or more event recording trigger conditions by monitoring (S102) ADS data;
in response to fulfilment of the one or more event message trigger conditions:
transmitting (S103), by the ADS monitoring layer, a first trigger signal to the ADS;
storing (S104), at a datastore of the ADS, an event message dataset comprising metadata associated with an event causing the fulfilment of the one or more event message trigger conditions;
transmitting (S105) the event message dataset to one or more remote servers;
in response to fulfilment of one or more event recording trigger conditions:
transmitting (S106), by the ADS monitoring layer, a second trigger signal to the ADS;
storing (S107), at the datastore of the ADS, an event recording dataset comprising perception data associated with the event causing the fulfilment of the one or more event recording trigger conditions and/or ADS output data associated with the event causing the fulfilment of the one or more event recording trigger conditions;
transmitting (S108) the event recording dataset to the one or more remote servers;
wherein the event recording dataset is larger than the event message dataset.

2. The method (S100) according to claim 1, further comprising:
in response to fulfilment of the one or more event message trigger conditions:
generating (S109) a unique identifier for the event message dataset;
wherein storing the event message dataset comprises storing the generated (S109) unique identifier;
in response to fulfilment of the one or more event recording trigger conditions:
generating (S110) a corresponding unique identifier for the event recording dataset so to enable pairing of event message datasets and event recording datasets associated with the same event;
wherein storing the event recording dataset comprises storing the generated (S110) corresponding unique identifier.

3. The method (S100) according to claim 1 or 2, wherein the one or more event message trigger conditions comprises a detection of an autonomous activation or deactivation of an ADS safety function, a detection of an autonomous activation or deactivation of an ADS driving function, a detection of a predefined object in a surrounding environment of the vehicle, a detection of a predefined scenario in a surrounding environment of the vehicle, a detection of a discrepancy between map data and sensor data, a detection of an error message from the ADS, a detection of a processing load of the ADS satisfying a threshold, a detection of a Random Access Memory (RAM) usage satisfying a threshold, and/or a detection of one or more message drops within the ADS.

4. The method (S100) according to any one of claims 1-3, wherein the one or more event message trigger conditions comprises one or more dynamically configurable event message trigger conditions and/or the one or more event recording trigger conditions comprises one or more dynamically configurable event recording trigger conditions.

5. The method (S100) according to claim 4, wherein the query further comprises update data comprising one or more new or updated event message trigger conditions and/or one or more new or updated event recording trigger conditions;
wherein the method further comprises updating (S111) the one or more dynamically configurable event message trigger conditions and/or the one or more dynamically configurable event recording trigger conditions based on the update data.

6. The method (S100) according to any one of claims 1-5, wherein the metadata comprises a geographical location of the event causing the fulfilment of the one or more event trigger conditions, a timestamp of the event causing the fulfilment of the one or more event trigger conditions, a classification of the event causing the fulfilment of the one or more event trigger conditions, ADS hardware information, ADS software information, weather information, vehicle information, a processing load value of the ADS, a RAM usage value of the ADS, a confidence in a perception output of the ADS, a confidence in a road model output of the ADS.

7. The method (S100) according to any one of claims 1-6, wherein the generated event message dataset is transmitted to the one or more remote servers upon having an established communication link to the one or more remote servers satisfying a first set of link quality criteria;
wherein the generated event recording dataset is transmitted to the one or more remote servers upon having an established communication link to the one or more remote servers satisfying a second set of link quality criteria;
wherein the second set of link quality criteria comprises a higher bandwidth requirement than the first set of link quality criteria.

8. The method according to any one of claims 1-7, wherein the ADS of the vehicle comprises safety certified software and wherein the ADS monitoring layer is an uncertified software layer that is separate from the safety certified software of the ADS.

9. A computer program product comprising instructions which, when the program is executed by a computing device of a vehicle, causes the computing device to carry out the method (S100) according to any one of claims 1-8.

10. A computer-readable storage medium comprising instructions which, when executed by a computing device of a vehicle, causes the computing device to carry out the method (S100) according to any one of claims 1-8.

11. A system (10) for monitoring driving experiences of an Automated Driving System (ADS) of a vehicle (1), the system comprising one or more memory storage areas (12) comprising program code, the one or more memory storage areas and the program code being configured to, with the one or more processors (11), cause the system (10) to at least:
receive, by an ADS monitoring layer (201) in communication with the ADS (310) of the vehicle and operating on a computing device of the vehicle (10), a query to monitor for an indication of an occurrence one or more event message trigger conditions and an occurrence of one or more event recording trigger conditions by monitoring ADS data (251, 252, 253);
in response to fulfilment of the one or more event message trigger conditions:
transmit, by the ADS monitoring layer (201), a first trigger signal to the ADS;
store, at a datastore of the ADS, an event message dataset comprising metadata associated with an event causing the fulfilment of the one or more event trigger conditions;
transmit the event message dataset to one or more remote servers (20);
in response to fulfilment of one or more event recording trigger conditions:
transmit, by the ADS monitoring layer (201), a second trigger signal to the ADS;
store, at the datastore of the ADS, an event recording dataset comprising perception data associated with the event causing the fulfilment of the one or more event recording trigger conditions and/or ADS output data associated with the event causing the fulfilment of the one or more event recording trigger conditions;
transmit the event recording dataset to the one or more remote servers;
wherein the event recording dataset is larger than the event message dataset.

12. The system (10) according to claim 11, wherein the one or more memory storage areas and the program code are configured to, with the one or more processors (11), cause the system (10) to at least:
in response to fulfilment of the one or more event message trigger conditions:
generate a unique identifier for the event message dataset;
wherein storing the event message dataset comprises storing the generated unique identifier;
in response to fulfilment of the one or more event recording trigger conditions:
generate a corresponding unique identifier for the event recording dataset so to enable pairing of event message datasets and event recording datasets associated with the same event;
wherein storing the event recording dataset comprises storing the generated corresponding unique identifier.

13. The system (10) according to claim 11 or 12, wherein the one or more event message trigger conditions comprises one or more dynamically configurable event message trigger conditions and/or the one or more event recording trigger conditions comprises one or more dynamically configurable event recording trigger conditions.

14. The system (10) according to claim 13, wherein the query further comprises update data comprising one or more new or updated event message conditions and/or one or more new or updated event recording conditions;
wherein the one or more memory storage areas and the program code configured to, with the one or more processors (11), cause the system (10) to at least:
update the one or more dynamically configurable event message trigger conditions and/or the one or more dynamically configurable event recording trigger conditions based on the received update data.

15. A vehicle (1) comprising an Automated Driving System (ADS) and a system (10) according to any one of claims 11-14.
